# FASCICULE DE BREVET EUROPEEN

(11) **EP 1 879 017 B1**
(45) Date de publication et mention de la délivrance du brevet: **02.01.2013**
(21) Numéro de dépôt: 07111639.6
(22) Date de dépôt: 03.07.2007
(51) Int. Cl.: G01N 21/05

(54) **Dispositif d'ecoulement d'un fluide et appareillage de mesure optique utilisant un tel dispositif.**
Flüssigkeitsströmungsvorrichtung und optisches Messgerät, das diese Vorrichtung nutzt.
Fluid flowing device and optical measurement equipment using such a device.

(30) Priorité: 12.07.2006 FR 0606351
(43) Date de publication de la demande: 16.01.2008
(73) Titulaire: Tethys Instruments, 38240 Meylan (FR)
(72) Inventeur: Mouflih, Rachid, 38000, GRENOBLE (FR)
(74) Mandataire: Zapalowicz, Francis

(56) Documents cités:
- WO-A-03/102288
- WO-A2-02/059599
- DE-U1- 8 606 172
- JP-A- 55 035 257
- US-A- 4 872 753
- US-A- 5 069 552
- US-A1- 2002 154 309
- US-A1- 2003 199 649
- US-A1- 2004 017 569

## Description

La présente invention concerne le domaine général des mesures appliquées à des fluides et plus particulièrement le domaine des mesures optiques appliquées à des liquides pouvant contenir des matières en suspension.

Dans le domaine de la spectrographie ou de la spectroscopie de fluides, en particulier de liquides tels que des eaux, il est courant d'utiliser un conduit allongé de section rectangulaire et à extrémités réduites, généralement en quartz, dans lequel on fait circuler le fluide à tester dans le sens de sa longueur et de placer de part et d'autre de ce conduit un émetteur et un récepteur de signaux lumineux, par exemple d'ultra-violets, couplés optiquement au travers de l'épaisseur la plus petite dudit conduit et reliés à des moyens électroniques adaptés pour fournir des informations sur la composition du fluide testé. Cependant, ledit conduit allongé pose des problèmes de fabrication tels que deux conduits allongés fabriqués n'ont pas les mêmes dimensions. I1 est donc nécessaire de procéder à un calibrage de l'appareillage à chaque fois que l'on change de conduit. De plus, ces tubes allongés posent des problèmes de colmatage si le fluide testé est chargé et sont difficiles à nettoyer.

Les documents US-A-2004/00117569, US-A- 4 872 753, US-A-5 069 552, WO-A-02/059599, US-A-2002/0154309, US-A-2003/0199649 et WO-A-03/102288 décrivent des dispositifs de mesure dans lesquels la paroi du conduit de fluide porte des éléments qui sont traversés et qui portent des fibres optiques. Le document JP-A-55036257 décrit un dispositif de mesure dans lequel la paroi du conduit de fluide porte des éléments pleins, de part et d'autre desquels sont placés un émetteur et un récepteur.

La présente invention a notamment pour but un perfectionnement auxdits appareillages de mesure.

La présente invention a pour objet un appareillage de mesure selon la revendication 1 comprenant un dispositif d'écoulement d'un fluide comprenant un carter dans lequel est ménagée une chambre et présentant dans sa paroi au moins un passage d'entrée et au moins un passage de sortie du fluide, et comprenant, dans ladite chambre , deux parties opposées en saillie présentant des faces frontales situées à distance l'une de l'autre de façon à ménager entre elles un espace d'écoulement d'épaisseur réduite, de telle sorte que le fluide peut circuler au travers dudit espace d'écoulement et autour desdites parties en saillie ; ainsi qu'au moins un émetteur de signaux et au moins un récepteur de signaux, cet émetteur et ce récepteur étant couplés et placés latéralement et de part et d'autre dudit carter dans une position telle que les signaux émis traversent la ou lesdites parties en saillie et ledit espace d'écoulement dans le sens de son épaisseur.

Selon l'invention, ce dispositif d'écoulement comprend, respectivement et successivement rapportés et empilés de façon étanche dans deux passages traversants opposés de la paroi du carter, des éléments qui présentent lesdites parties en saillie, des bagues annulaires intermédiaires et des disques, lesdits éléments et lesdits disques étant en un matériau transparent au rayonnement émis par ledit émetteur, ce rayonnement passant au travers de ces éléments et de ces disques et traversant les passages centraux desdits bagues.

Selon l'invention, lesdites bagues intermédiaires sont de préférence munies d'un matériau déshydratant.

Selon l'invention, lesdits passages traversants opposés du carter présentent des épaulements annulaires et lesdits éléments présentent des épaulements annulaires en appui sur lesdits épaulements desdits passages traversants, des bagues annulaires de fixation sur le carter étant rapportées et empilées, ledit rayonnement traversant les passages centraux de ces bagues.

Selon l'invention, l'appareillage peut avantageusement comprendre en outre, successivement rapportés et empilés de façon étanche dans un passage traversant de la paroi du carter, un élément auxiliaire, une bague annulaire intermédiaire, un disque, cet élément auxiliaire et ce disque étant en un matériau transparent au rayonnement émis par ledit émetteur, et comprendre un second récepteur placé latéralement audit carter et orienté en direction dudit espace d'écoulement, de façon à détecter le rayonnement réfléchi traversant l'élément auxiliaire et la bague annulaire ci-dessus.

Selon l'invention, ladite bague annulaire intermédiaire ci-dessus est munie d'un matériau déshydratant.

Selon l'invention, des joints d'étanchéité sont de préférence prévus entre d'une part lesdits éléments et lesdites bagues et d'autre part ledit carter.

Selon l'invention, le passage d'entrée et le passage de sortie sont de préférence situés de part et d'autre dudit passage d'écoulement.

Selon l'invention, lesdites parties en saillie sont de préférence cylindriques.

Selon une variante de l'invention, la bague intermédiaire et le disque de chaque empilage sont de préférence assemblés pour constituer une unité creuse, délimitant un espace étanche rempli d'un gaz non humide.

La présente invention sera mieux comprise à l'étude d'un appareillage de mesure comprenant un dispositif d'écoulement d'un fluide, décrit à titre d'exemple non-limitatif et illustré par le dessin sur lequel :
- La figure 1 représente une coupe transversale selon un axe principal d'un dispositif d'écoulement selon la présente invention;
- La figure 2 représente une autre coupe transversale du dispositif de la figure 1, selon un axe perpendiculaire audit axe principal. ;
- Et la figure 3 représente une coupe transversale correspondant à la figure 2, d'un complément au dispositif des figures 1 et 2.

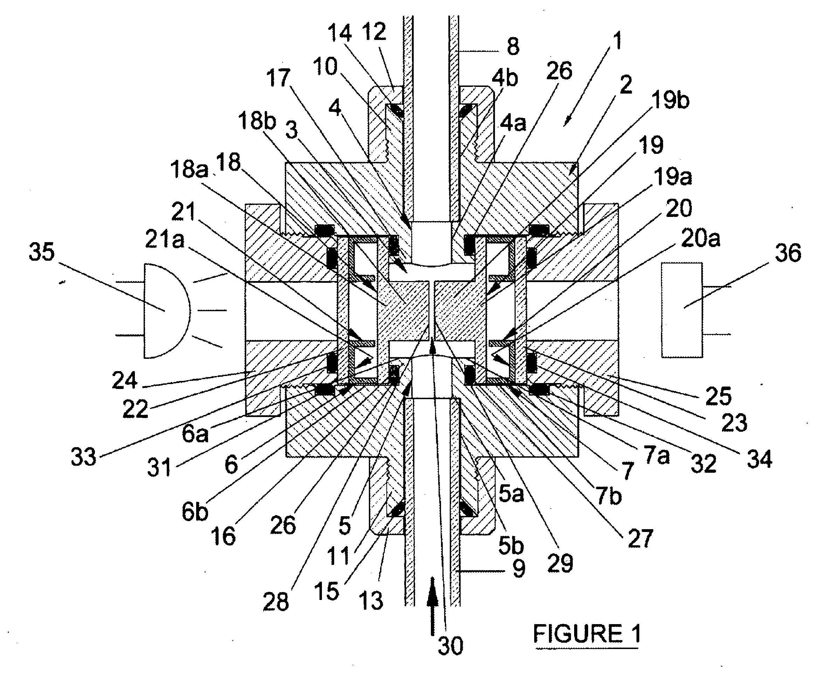

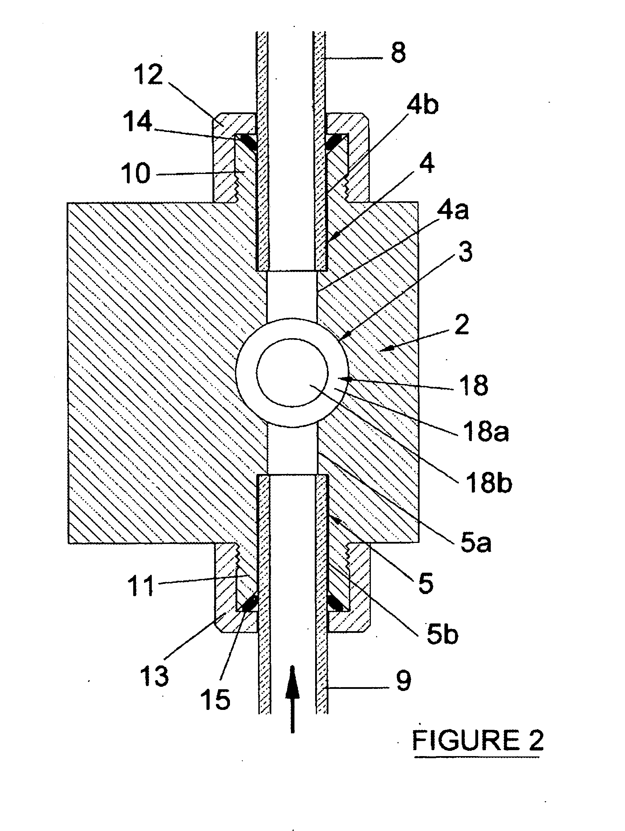

Le dispositif d'écoulement 1 représenté sur les figures 1 et 2 comprend un carter 2 constitué par un bloc sensiblement parallélépipédique, par exemple en plexiglas.

Ce carter 2 présente une chambre centrale 3 qui est déterminée par la partie de jonction de deux passages traversants cylindriques opposées et coaxiaux 4 et 5 et de deux passages traversants cylindriques opposés et coaxiaux 6 et 7, les passages 4 et 5 et les passages 6 et 7 étant disposés perpendiculairement.

Les passages 4 et 5 présentent des parties intérieures 4a et 5a de diamètres identiques et des parties extérieures 4b et 5b de diamètres agrandis identiques.

Dans ces parties extérieures 4b et 5b sont engagées les extrémités de conduits 8 et 9 d'entrée/sortie de fluide. Le carter 2 présente des parties extérieures opposées en saillie 10 et 11 entourant les passages 4 et 5 et sur lesquels sont vissés des écrous 12 et 13 à collerettes intérieures serrant des joints annulaires d'étanchéité 14 et 15 contre les extrémités des parties en saillie 10 et 11 et la périphérie des conduits 8 et 9.

Les passages 6 et 7 présentent des parties intérieures 6a et 7a de diamètres identiques et des parties extérieures 6b et 7b de diamètres agrandis et identiques déterminant entre elles des épaulements 16 et 17.

Dans les parties extérieures 6b et 7b des passages 6 et 7 sont respectivement et successivement rapportés et empilés de façon étanche des éléments cylindriques 18 et 19, des bagues annulaires intermédiaires 20 et 21, des disques pleins 22 et 23 et des bagues annulaires de fixation 24 et 25.

Les éléments 18 et 19 présentent des épaulements annulaires 18a et 19a en appui sur les épaulements 16 et 17 du carter, avec interposition de joints annulaires d'étanchéité 26 et 27, et des parties cylindriques 18b et 19b passant au travers des parties intérieures 6b et 7b et de plus petits diamètres de façon à être disposées en saillie dans la chambre 3.

Les parties cylindriques 18b et 19b en saillie des éléments 18 et 19 présentent des faces frontales radiales 28 et 29 venant à proximité l'une de l'autre de façon à déterminer un espace d'écoulement 30 placé dans l'alignement des passages 4 et 5 d'entrée/sortie de fluide.

Ainsi, un fluide traversant la chambre 3 entre les passages 4 et 5 d'entrée/sortie passe au travers de l'espace d'écoulement 30, entre les faces frontales 28 et 29 des éléments 18 et 19, et passe autour des parties cylindriques en saillie 18b et 19b de ces éléments.

Les bagues annulaires intermédiaires 20 et 21 présentent des évidements annulaires 20a et 21 a remplis d'un matériau déshydratant de façon à éviter de la condensation sur les faces en vis-à-vis des éléments 18 et 19 et des disques pleins 22 et 23.

Les bagues annulaires de fixation 24 et 25 sont vissées dans les parties extrémité des parties extérieures 6b et 7b des passages 6 et 7, avec interposition de joints annulaires d'étanchéité 31 et 32 entre ces bagues et ces parties extérieures et interposition de joints annulaires d'étanchéité 33 et 34 entre ces bagues et les disques pleins 22 et 23.

Le dispositif 1 qui vient d'être décrit peut avantageusement faire partie d'un appareillage comprenant un émetteur 35 et un récepteur de signaux 36, placés de part et d'autre du carter 2, en face des passages traversants des bagues de fixation 24 et 25, par exemple dans des positions telles que leurs axes optiques soient sensiblement confondus avec les axes desdits empilages montés dans les passages 6 et 7 du carter 2, de telle sorte que le chemin du rayonnement de l'émetteur 35 traverse l'espace d'écoulement 30.

Les éléments 18 et 19 et les disques 22 et 23 sont en un matériau transparent au rayonnement émis par l'émetteur 35.

Par exemple, pour un appareillage destiné à effectuer des analyses d'eaux, les éléments 18 et 19 et les disques 22 et 23 peuvent être en quartz et les signaux émis par l'émetteur 35 peuvent être des signaux optiques ou lumineux, par exemple un rayonnement ultraviolet.

Ainsi, le rayonnement émis par l'émetteur 36 peut, par exemple dans ce sens, traverser successivement le passage central de la bague 24, le disque 22, le passage central de la bague 20, et l'élément 18, puis traverser la lame de fluide circulant dans l'espace d'écoulement 30, puis traverser successivement, l'élément 19, le passage central de la bague 21, le disque 23 et le passage central de la bague 25, pour être captés par le récepteur 36.

L'appareillage précité comprend par ailleurs des moyens électroniques reliés à l'émetteur 35 et au récepteur 36 et adaptés pour fournir des informations sur la composition du fluide testé circulant dans la chambre 3, résultant de mesures d'absorbance du fluide testé, de façon à détecter au moins certains des éléments physico-chimiques contenus dans le fluide, en particulier le liquide, et à déterminer leur concentration.

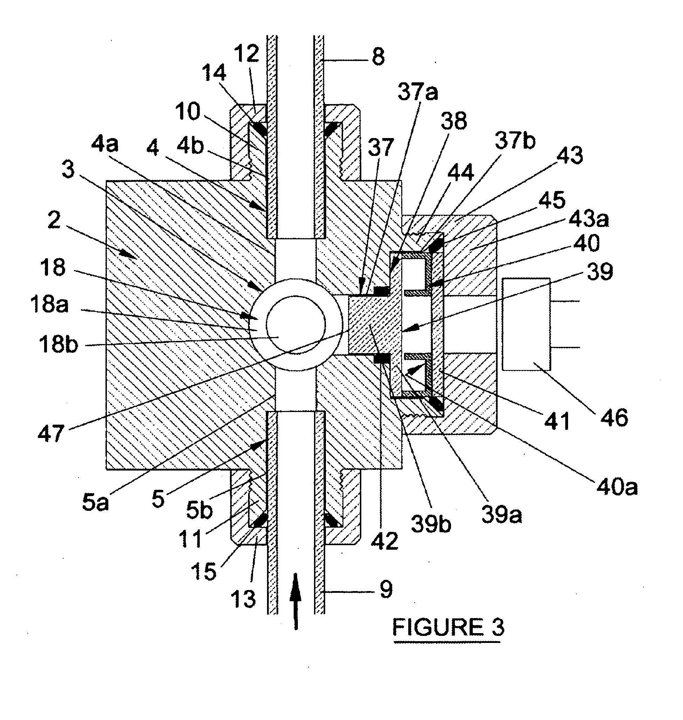

En se reportant à la figure 3, on peut voir que le dispositif d'écoulement 1 est complété par les dispositions suivantes.

Le carter 2 présente un passage auxiliaire cylindrique traversant 37 qui est disposé perpendiculairement aux passages 4 et 5 et aux passages 6 et 7 et qui débouche dans la chambre 3.

Ce passage 37 présente une partie intérieure 37a et une partie extérieure 37b déterminant entre elles un épaulement 38.

Dans ce passage 37 est disposé un empilage qui comprend un élément 39, une bague annulaire intermédiaire 40 et un disque plein 41.

L'élément 39 présente une partie annulaire 39a en appui sur l'épaulement 38 et une partie en saillie 39b qui est engagée dans la partie intérieure 37a du passage 37 et qui présente une face frontale radiale 47 située en face et à distance de l'espace d'écoulement 30, perpendiculairement à l'épaisseur de cet espace. Un joint annulaire d'étanchéité 42 est interposé entre la partie en saillie 39b de l'élément 39 et la partie intérieure 37a du passage 37.

La bague annulaire intermédiaire 40 présente un évidemment annulaire 40a rempli d'un matériau déshydratant de façon à éviter de la condensation sur les faces en vis-à-vis de l'élément 39 et du disque plein 41.

Une bague annulaire de fixation ou écrou de maintien 43 est vissé sur une partie extérieure en saillie 44 du carter 2 entourant le passage 37, cet écrou présentant une collerette annulaire intérieure 43a en appui sur le disque 41. Un joint annulaire d'étanchéité 45 est placé dans le coin entre la partie extérieure en saillie 44 du carter 2, la périphérie du disque 41 et l'écrou 43.

L'appareillage précité peut avantageusement comprendre un récepteur 46 de signaux, placé en face du passage traversant de l'écrou 43.

L'élément 39 et le disque 41 sont en un matériau transparent au rayonnement émis par l'émetteur 35. comme indiqué précédemment, l'élément 39 et le disque 41 peuvent être en quartz.

Ainsi, grâce au récepteur 46 placé de façon inclinée par rapport à la direction d'émission de l'émetteur 35, on peut effectuer des mesures de réflexion ou en fluorescence sur le fluide testé circulant dans la chambre 3 et traversant l'espace d'écoulement 30, dans une direction perpendiculaire à l'épaisseur de cet espace 30, de façon à détecter au moins certains des éléments physico-chimiques contenus dans le fluide, en particulier le liquide, et réfléchissant la lumière et à déterminer leur concentration.

Selon une variante, la direction du faisceau lumineux émis par l'émetteur 35 et les parties du dispositif traversées par ce faisecau pourraient être inclinées par rapport à l'épaisseur de l'espace d'écoulement 30.

Selon une autre variante, l'orientation du récepteur 46 et les parties du dispositif traversées par le faisceau atteignant ce récepteur pourraient ne pas être perpendiculaires à l'espace d'écoulement 30.

Selon une autre variante, l'élément présentant la partie en saillie, la bague intermédiaire et le disque de chaque empilage pourraient être assemblés pour constituer une unité creuse, délimitant un espace étanche rempli d'un gaz non humide.

D'autres variantes de réalisation sont possibles sans sortir du cadre des revendications annexées.

## Revendications

1. Appareillage de mesure comprenant :
un dispositif d'écoulement d'un fluide (1) comprenant un carter (2) dans lequel est ménagée une chambre et présentant dans sa paroi au moins un passage d'entrée et au moins un passage de sortie du fluide (4, 5) et comprenant, dans ladite chambre (3), deux parties opposées en saillie (18b, 19b) présentant des faces frontales (28, 29) situées à distance l'une de l'autre de façon à ménager entre elles un espace d'écoulement (30) d'épaisseur réduite, de telle sorte que le fluide peut circuler au travers dudit espace d'écoulement et autour desdites parties en saillie ;
ainsi qu'au moins un émetteur de signaux (35) et au moins un récepteur de signaux (36), cet émetteur et ce récepteur étant couplés et placés latéralement et de part et d'autre dudit carter dans une position telle que les signaux émis traversent lesdites parties en saillie et ledit espace d'écoulement (30) dans le sens de son épaisseur ;
**caractérisé par le fait que** le dispositif d'écoulement comprend, respectivement et successivement rapportés et empilés de façon étanche dans deux passages traversants opposés (6, 7) de la paroi du carter et sur des épaulements annulaires (16, 17) ménagés dans ces passages :
- des éléments (18, 19) qui présentent lesdites parties en saillie (18b, 19b) et qui présentent des épaulements annulaires (18a, 19a) en appui sur lesdits épaulements (16, 17) desdits passages traversants (6, 7),
- des bagues annulaires intermédiaires (20, 21),
- des disques (22, 23),
- et des bagues annulaires de fixation (24, 25) vissées sur le carter ;
lesdits éléments (18, 19) et lesdits disques (22, 23) étant en un matériau transparent au rayonnement émis par ledit émetteur (35), ce rayonnement passant au travers de ces éléments et de ces disques et traversant les passages centraux desdits bagues annulaires intermédiaires (20, 21) et desdites bagues annulaires de fixation (24, 25).

2. Appareillage selon la revendication 1, **caractérisé par le fait qu'**il comprend en outre, successivement rapportés et empilés de façon étanche dans un passage traversant (37) de la paroi du carter, un élément auxiliaire (39), une bague annulaire intermédiaire (40), un disque (41), cet élément auxiliaire et ce disque étant en un matériau transparent au rayonnement émis par ledit émetteur (35), et qu'il comprend un second récepteur (46) placé latéralement audit carter et orienté en direction dudit espace d'écoulement (30), de façon à détecter le rayonnement réfléchi traversant l'élément auxiliaire (39) et la bague annulaire (40) ci-dessus.

3. Appareillage selon l'une des revendications 1 et 2, **caractérisé par le fait que** lesdites bagues annulaires intermédiaires sont munies d'un matériau déshydratant.

4. Appareillage selon l'une des revendications précédentes, **caractérisé par le fait qu'**il comprend des joints d'étanchéité entre d'une part lesdits éléments et lesdites bagues et d'autre part ledit carter.

5. Appareillage selon l'une quelconque des revendications précédentes, **caractérisé par le fait que** le passage d'entrée et le passage de sortie sont situés de part et d'autre dudit passage d'écoulement (3).

6. Appareillage selon l'une quelconque des revendications précédentes, **caractérisé par le fait que** lesdites parties en saillie sont cylindriques.

7. Appareillage selon l'une quelconque des revendications précédentes, **caractérisé par le fait que** la bague intermédiaire et le disque de chaque empilage sont assemblés pour constituer une unité creuse, délimitant un espace étanche rempli d'un gaz non humide.

## Claims

1. Measuring apparatus comprising:
a fluid-flow device (1) comprising a casing (2) in which a chamber is arranged and having in its wall at least one inlet passageway and at least one outlet passageway (4, 5) for the fluid and comprising, in the said chamber (3), two opposite protruding portions (18b, 19b) having transverse faces (28, 29) situated at a distance from one another so as to arrange between them a flow space (30) of reduced thickness, such that the fluid can travel through the said flow space and around the said protruding portions;
and at least one signal transmitter (35) and at least one signal receiver (36), this transmitter and this receiver being coupled and placed laterally and on either side of the said casing in a position such that the transmitted signals traverse the said protruding portions and the said flow space (30) in the direction of its thickness;
**characterized in that** the flow device comprises, respectively and successively fitted and stacked in a sealed manner in two opposite through-passageways (6, 7) of the wall of the casing and over the annular shoulders (16, 17) arranged in these passageways:
- elements (18, 19) which have the said protruding portions (18b, 19b) and which have annular shoulders (18a, 19a) resting on the said shoulders (16, 17) of the said through-passageways (6, 7),
- intermediate annular rings (20, 21),
- discs (22, 23),
- and annular fastening rings (24, 25) screwed onto the casing;
the said elements (18, 19) and the said discs (22, 23) being made of a material transparent to the radiation transmitted by the said transmitter (35), this radiation passing through these elements and through these discs and passing through the central passageways of the said intermediate annular rings (20, 21) and of the said annular fastening rings (24, 25).

2. Apparatus according to Claim 1, **characterized in that** it also comprises, successively fitted and stacked in a sealed manner in a through-passageway (37) of the wall of the casing, an auxiliary element (39), an intermediate annular ring (40), a disc (41), this auxiliary element and this disc being made of a material transparent to the radiation transmitted by the said transmitter (35), and that it comprises a second receiver (46) placed laterally to the said casing and oriented in the direction of the said flow space (30), so as to detect the reflected radiation traversing the above auxiliary element (39) and annular ring (40).

3. Apparatus according to one of Claims 1 and 2, **characterized in that** the said intermediate annular rings are furnished with a dehydrating material.

4. Apparatus according to one of the preceding claims, **characterized in that** it comprises seals between on the one hand the said elements and the said rings and on the other hand the said casing.

5. Apparatus according to any one of the preceding claims, **characterized in that** the inlet passageway and the outlet passageway are situated on either side of the said flow passageway (3).

6. Apparatus according to any one of the preceding claims, **characterized in that** the said protruding portions are cylindrical.

7. Apparatus according to any one of the preceding claims, **characterized in that** the intermediate ring and the disc of each stack are assembled to form a hollow unit delimiting a sealed space filled with a non-humid gas.

## Patentansprüche

1. Messgerät, das enthält:
eine Strömungsvorrichtung eines Fluids (1), die ein Gehäuse (2) enthält, in dem eine Kammer ausgespart ist und das in seiner Wand mindestens einen Eingangsdurchgang und mindestens einen Ausgangsdurchgang (4, 5) des Fluids aufweist, und das in der Kammer (3) zwei gegenüberliegende vorstehende Teile (18b, 19b) enthält, die Stirnseiten (28, 29) aufweisen, welche sich in Abstand zueinander befinden, um zwischen sich einen Strömungsraum (30) verringerter Dicke auszusparen, so dass das Fluid durch den Strömungsraum und um die vorstehenden Teile fließen kann;
sowie mindestens einen Signalsender (35) und mindestens einen Signalempfänger (36), wobei dieser Sender und dieser Empfänger gekoppelt und seitlich und zu beiden Seiten des Gehäuses in einer solchen Stellung angeordnet sind, dass die gesendeten Signale die vorstehenden Teile und den Strömungsraum (30) in Richtung seiner Dicke durchqueren;
**dadurch gekennzeichnet, dass** die Strömungsvorrichtung jeweils und nacheinander angesetzt und dicht gestapelt in zwei gegenüberliegenden Durchgangsdurchlässen (6, 7) der Wand des Gehäuses und auf in diesen Durchgängen ausgesparten ringförmigen Schultern (16, 17) enthält:
- Elemente (18, 19), die die vorstehenden Teile (18b, 19b) aufweisen, und die ringförmige Schultern (18a, 19a) in Auflage auf den Schultern (16, 17) der Durchlassdurchgänge (6, 7) aufweisen,
- Zwischenringe (20, 21),
- Scheiben (22, 23),
- und Befestigungsringe (24, 25), die auf das Gehäuse geschraubt sind;
wobei die Elemente (18, 19) und die Scheiben (22, 23) aus einem für die vom Emitter (35) emittierte Strahlung durchlässig sind, wobei diese Strahlung diese Elemente und diese Scheiben durchquert und die zentralen Durchgänge der Zwischenringe (20, 21) und der Befestigungsringe (24, 25) durchquert.

2. Gerät nach Anspruch 1, **dadurch gekennzeichnet, dass** es außerdem nacheinander angesetzt und dicht gestapelt in einem Durchlassdurchgang (37) der Wand des Gehäuses ein Hilfselement (39), einen Zwischenring (40), eine Scheibe (41) enthält, wobei dieses Hilfselement und diese Scheibe aus einem für die vom Emitter (35) emittierte Strahlung durchlässig sind, und dass es einen zweiten Empfänger (46) enthält, der seitlich zum Gehäuse angeordnet und in Richtung des Strömungsraums (30) ausgerichtet ist, um die reflektierte Strahlung zu erfassen, die das obige Hilfselement (39) und den obigen Ring (40) durchquert.

3. Gerät nach einem der Ansprüche 1 und 2, **dadurch gekennzeichnet, dass** die Zwischenringe mit einem dehydrierenden Material versehen sind.

4. Gerät nach einem der vorhergehenden Ansprüche, **dadurch gekennzeichnet, dass** es Dichtungen zwischen einerseits den Elementen und den Ringen und andererseits dem Gehäuse enthält.

5. Gerät nach einem der vorhergehenden Ansprüche, **dadurch gekennzeichnet, dass** der Eingangsdurchgang und der Ausgangsdurchgang sich zu beiden Seiten des Strömungsdurchgangs (3) befinden.

6. Gerät nach einem der vorhergehenden Ansprüche, **dadurch gekennzeichnet, dass** die vorstehenden Teile zylindrisch sind.

7. Gerät nach einem der vorhergehenden Ansprüche, **dadurch gekennzeichnet, dass** der Zwischenring und die Scheibe jedes Stapels zusammengesetzt werden, um eine hohle Einheit zu bilden, die einen mit einem nicht feuchten Gas gefüllten Raum begrenzen.
